# EUROPÄISCHE PATENTSCHRIFT

(11) **EP 0 946 357 B1**
(45) Veröffentlichungstag und Bekanntmachung des Hinweises auf die Patenterteilung: **28.02.2001**
(21) Anmeldenummer: 97951159.9
(22) Anmeldetag: 10.11.1997
(51) Int. Cl.: B32B 15/01, A44C 21/00

(54) **SCHICHTVERBUNDWERKSTOFF UND SEINE VERWENDUNG FÜR MÜNZEN**
COMPOSITE STRATIFIED MATERIAL AND ITS USE FOR COINS
MATERIAU COMPOSITE STRATIFIE ET SON UTILISATION POUR DES PIECES DE MONNAIE

(30) Priorität: 12.11.1996 DE 19646657
(43) Veröffentlichungstag der Anmeldung: 06.10.1999
(73) Patentinhaber: Krupp VDM GmbH, 58791 Werdohl (DE)
(72) Erfinder: KOLB-TELIEPS, Angelika, D-58509 Lüdenscheid (DE); HEUBNER, Ulrich, D-58791 Werdohl (DE)
(86) Internationale Anmeldenummer: EP9706234
(87) Internationale Veröffentlichungsnummer: WO9821028

(56) Entgegenhaltungen:
- EP-A- 0 343 701
- US-A- 3 607 147
- PATENT ABSTRACTS OF JAPAN vol. 16, no. 273 (C-953), 18.Juni 1992 & JP 04 066651 A (NISSHIN STEEL CO LTD), 3.März 1992, in der Anmeldung erwähnt

## Beschreibung

Die Erfindung betrifft die Verwendung eines Schichtverbundwerkstoffes.

Aus der JP 04066651 und der US 27 75 520 sind nichtrostende Chrom-Nickel-Stahllegierungen als Münzwerkstoffe für einlagig hergestellte Münzen bekannt, die im Mittel 17,8 Masse-% Chrom, 12,8 Masse-% Nickel und 3 Masse-% Kupfer enthalten.

Durch die EP-A 0 343 701 ist ein Schichtverbundwerkstoff zur Herstellung von Münzen bekannt, der u. a. eine Kernschicht aus einem ferritischen Chrom-Stahl beinhalten kann die beidseitig mit einer Schicht aus einem austenitischen Chrom-Nickel-Stahl plattiert ist.

Kam es in früheren Zeiten bei den Kurantmünzen darauf an, daß der Metallwert dem Nennwert der Münzen entsprach, so bestimmte sich aus dieser Forderung die Wahl des Metalls. Man verwendete Gold, Silber und unedle Metalle sowie deren Legierungen. Im Zuge der Industrialisierung ab Mitte des 19. Jahrhunderts kamen immer mehr Scheidemünzen in den Verkehr, bei welchen der Werkstoff einerseits entsprechend der Möglichkeit einer wirtschaftlichen Fertigung ausgewählt wurde und andererseits nach der optischen Erscheinung.

Häufig wurden Nickel und bestimmte Kupferlegierungen eingesetzt. In jüngerer Zeit wird mehr und mehr der Ruf nach preisgünstigeren Münzen laut. Im Zuge dieser Entwicklung sind auch schon verschiedene Arten nichtrostender Stähle zu Münzen verarbeitet worden. Eingesetzt werden vor allem der ferritische Stahl X 6 Cr 17 (Deutsche Werkstoff-Nr. 1.4016) und der austenitische Stahl X 5 CrNi 1812 (Deutsche Werkstoff-Nr. 1.4303).

Einer weiteren Verbreitung von Edelstahl als Münzwerkstoff stand bisher die Problematik des Prägens entgegen. Aufgrund von Härtewerten, die sich in der Praxis hier doch immer wieder zu etwa 140 bis 160 HV30, im Mittel etwa 150 HV30 für den weichgeglühten Zustand ergeben, waren die Prägebilder relativ flach, allerdings sehr abriebbeständig und die Münzen über lange Zeit korrosionsbeständig, wie z.B. in "Coinage Materials, XVII Mint Directors' Conference Madrid 1992" beschrieben wird.

Auch der bläuliche Farbton insbesondere der ferritischen nichtrostenden Stähle läßt diese visuell nicht als gleichwertig gegenüber den visuell eher als weiß empfundenen Münzwerkstoffen wie Silber oder Nickel und deren Legierungen erscheinen.

Im Gegensatz zu den früher üblichen mechanischen Münzprüfgeräten wird mit Hilfe der heute weithin üblichen elektronischen Münzprüfgeräte neben Durchmesser und Dicke die elektrische Leitfähigkeit induktiv bei verschiedenen Frequenzen, d.h. in unterschiedlichem Abstand von der äußeren Oberfläche gemessen. Damit lassen sich schichtförmige Werkstoffverbunde besonders sicher erkennen und von Fremdmünzen und Falsifikaten trennen.

Damit ergibt sich als ein weiteres wichtiges Kriterium bei der Bereitstellung von Münzwerkstoffen, daß die Werkstoffeigenschaften, wie Dichte, elektrische Leitfähigkeit und Magnetisierungsverhalten, in einem sehr engen Akzeptanzbereich eingestellt werden müssen.

Aufgabe der Erfindung ist es nun, einen nichtrostenden Werkstoff bereitzustellen, welcher eine im Vergleich zum Stand der Technik leichtere Prägbarkeit bei zugleich visuell als weiß oder silbrig empfundener Farbe bietet und welcher sich außerdem zu Münzen verarbeiten läßt, welche in den heute üblichen Münzpfrüfautomaten eine sichere Unterscheidbarkeit von anderen Münzen und von Falsifikaten erlauben.

Diese Aufgabe wird erfindungsgemäß durch die Verwendung eines Schichtverbundwerkstoffes, bestehend aus einer Kernschicht aus einem ferritischen Chromstahl, die beidseitig mit einer Stahlschicht plattiert ist, wobei der zum Plattieren der Kernschicht verwendete Stahl aus in Masse-%

| | |
|---|---|
| Chrom | 16,0 bis 18,0 |
| Nickel | 10,0 bis 12,0 |
| Kupfer | 3,5 bis 4,5 |

Rest Eisen sowie herstellungsbedingte Verunreinigungen besteht, der zusätzlich ein oder mehrere der folgenden Elemente in Masse-% enthält:

| | |
|---|---|
| Mangan | max. 1,5 |
| Silizium | max. 0,4 |
| Kohlenstoff | max. 0,02 |
| Stickstoff | max. 0,02 |
| Schwefel | max. 0,01 |
| Phosphor | max. 0,03 |
| Molybdän | max. 1,0 |
| Titan | max. 0.03 |
| Niob | max. 0.05 |
| Aluminium | max. 0,1 |
| Kobalt | max. 0,3 |
| Bor | max. 0,003. |

als Werkstoff für die Herstellung von geprägten Münzen, Wert- oder Spielmarken.

Vorteilhafte Weiterbildung des Erfindungsgegenstandes sind den Unteransprüchen zu entnehmen.

Überraschenderweise hat sich nämlich gezeigt, daß ein Schichtverbundwerkstoff aus einem derartigen Stahl im weichgeglühten Zustand sowohl den angestrebten visuell als weiß oder silbrig empfundenen Farbton aufweist, als auch mit seiner Härte deutlich unter 140 HV30 gehalten werden kann und in der Regel sogar unter 120 HV30.

Diese im Vergleich zu den nach dem Stand der Technik für Münzrohlinge verwendeten nichtrostenden Stähle um im Mittel etwa 20 % niedrigeren Härtewerte ermöglichen ein sehr viel tieferes und plastischeres Prägebild. Trotzdem ist die in einem Trommelversuch an Probemünzen bestimmte Abriebfestigkeit dieser neuen Münzwerkstoffe vergleichbar mit derjenigen der Edelstähle X 6 Cr 17 und X 5 CrNi 18 12 und um etwa einen Faktor drei höher als diejenige herkömmlicher Münzwerkstoffe auf Kupferbasis wie z.B. CuAl₆Ni₂.

Die Vergleichbarkeit mit anderen Edelstählen zeigte sich auch bei der Prüfung der Anlaufbeständigkeit in einer aggressiven Laboratmosphäre, über 10%iger NaCI-Lösung und unter Einwirkung von künstlichem Schweiß.

Die geforderte sichere Unterscheidbarkeit von anderen Münzen und von Falsifikaten in heute üblichen Münzprüfgeräten ist mit einem solchen Schichtverbundwerkstoff besonders sicher gegeben, wenn er erfindungsgemäß eine Kemschicht aus einem ferritischen Chromstahl aufweist, die beidseitig mit einem derartigen Stahl beschichtet ist.

Anhand eines Ausführungsbeispiels wird die Erfindung im folgenden näher erläutert: Erschmolzen wurde ein kupferlegierter nichtrostender Stahl mit der Zusammensetzung (in Masse-%):

| | |
|---|---|
| Chrom | 17,35 |
| Nickel | 10,25 |
| Kupfer | 3,65 |
| Mangan | 0,67 |
| Silizium | 0,30 |
| Kohlenstoff | 0,014 |
| Stickstoff | 0,015 |
| Schwefel | 0,003 |
| Phosphor | 0,012 |
| Molybdän | 0,49 |
| Titan | < 0,010 |
| Niob | 0,010 |
| Aluminium | 0,020 |
| Kobalt | 0,01 |
| Bor | 0,002 |

Rest Eisen sowie herstellungsbedingte Verunreinigungen.

Der Stahl wurde zu Band der Dicke 2,07 mm warm- und anschließend kaltgewalzt Aus dem Kaltband werden dann Münzrohlinge mit einem Durchmesser von 25,30 mm gestanzt. Diese zeigten den gewünschten silbrig-weißen Farbton.

Nach dem Rändeln betrug der Durchmesser 24,85 mm. Das Stückgewicht dieser Plättchen liegt bei 8,10 g, ihre Dichte beträgt 7, 98 g/cm³. Durch Weichglühen konnte ohne Grobkombildung eine Härte von 117 HV30 eingestellt werden, mit der Konsequenz leichter Prägbarkeit, die durch Verprägen von Probemünzen ermittelt wurde.

Diese Münzen wurden in einem 24-stündigen Trommelversuch mit solchen aus den als Münzwerkstoffe sonst üblichen nichtrostenden Stählen X 6 Cr 17 und X 5 CrNi 18 12 verglichen, wobei die Massenverluste bei allen drei Werkstoffen bei 0,1 % lagen. Münzen aus dem sonst vielfach üblichen Kupferwerkstoff CuAl₆Ni₂ dagegen führten zu dem dreifachen Wert.

Auch bei einer Korrosionsprüfung in einer aggressiven Laboratmosphäre, über 10%iger NaCI-Lösung und unter Einwirkung von künstlichem Schweiß veränderte sich der neue Münzwerkstoff nach drei Wochen nur unwesentlich.

Bänder aus diesem Ausführungsbeispiel wurden beidseitig auf den ferritischen Chromstahl X 6 Cr 17 plattiert, mit Schichtdicken von jeweils 20 % der Gesamtdicke, mit dem Ergebnis der dann bestehenden sicheren Unterscheidbarkeit von anderen Münzen und von Falsifikaten in heute üblichen Münzprüfgeräten.

Ein noch zu erwähnendes weiteres Merkmal der Erfindung ist, daß sich der vorgeschlagene neue Münzwerkstoff durch eine problemlose Rezyklierbarkeit mit Hilfe der heute üblichen Stahlwerkstechnologien auszeichnet, und zwar nicht nur dann, wenn er als Einzelkomponente Verwendung findet, sondern auch dann, wenn er als Komponente eines Werkstoffverbundes zusammen mit einem ferritischen Chromstahl zur Anwendung kommt.

## Patentansprüche

1. Verwendung eines Schichtverbundwerkstoffes, bestehend aus einer Kernschicht aus einem ferritischen Chromstahl, die beidseitig mit einer Stahlschicht plattiert ist, wobei der zum Plattieren der Kernschicht verwendete Stahl aus in Masse-%
| | |
|---|---|
| Chrom | 16,0 bis 18,0 |
| Nickel | 10,0 bis 12,0 |
| Kupfer | 3,5 bis 4,5 |
Rest Eisen sowie herstellungsbedingte Verunreinigungen besteht, der zusätzlich ein oder mehrere der folgenden Elemente in Masse-% enthält:
| | |
|---|---|
| Mangan | max. 1,5 |
| Silizium | max. 0,4 |
| Kohlenstoff | max. 0,02 |
| Stickstoff | max. 0,02 |
| Schwefel | max. 0,01 |
| Phosphor | max. 0,03 |
| Molybdän | max. 1,0 |
| Titan | max. 0.03 |
| Niob | max. 0.05 |
| Aluminium | max. 0,1 |
| Kobalt | max. 0,3 |
| Bor | max. 0,003. |
als Werkstoff für die Herstellung von geprägten Münzen, Wert- oder Spielmarken.

2. Verwendung nach Anspruch 1, dadurch gekennzeichnet, daß die Dicke der aufplattierten Schichten 10 bis 30% der Gesamtdicke des Schichtverbundwerkstoffes beträgt.

3. Verwendung nach Anspruch 1 oder 2, dadurch gekennzeichnet, daß die Kernschicht aus dem Werkstoff X 6 Cr 17 besteht.

## Claims

1. Use of a composite stratified material consisting of a core layer of a ferritic chromium steel, which is plated on both sides with a steel layer, the steel used for plating the core layer consisting of, in percentage by mass
| | |
|---|---|
| chromium | 16.0 to 18.0 |
| nickel | 10.0 to 12.0 |
| copper | 3.5 to 4.5 |
rest iron as well as impurities from the manufacturing process, and additionally containing one or more of the following elements in percentage by mass:
| | |
|---|---|
| manganese | max. 1.5 |
| silicium | max. 0.4 |
| carbon | max. 0.02 |
| nitrogen | max. 0.02 |
| sulphur | max. 0.01 |
| phosphorous | max. 0.03 |
| molybdenum | max. 1.0 |
| titanium | max. 0.03 |
| niobium | max. 0.05 |
| aluminium | max. 0.1 |
| cobalt | max. 0.3 |
| boron | max. 0.003 |
as material for the manufacture of stamped coins, slugs or chips.

2. Use according to claim 1, characterized in that the thickness of the plated layers is 10 to 30% of the total thickness of the composite stratified material.

3. Use according to claim 1 or 2, characterized in that the core layer consists of the material X 6 Cr 17.

## Revendications

1. Utilisation d'un matériau composite stratifié consistant en une couche de noyau composé d'un acier chromé ferritique, laquelle est plaquée d'une couche d'acier sur les deux faces, l'acier utilisé pour plaquer la couche de noyau étant composé, en pourcentage en masse, de
| | |
|---|---|
| chrome | 16,0 à 18,0 |
| nickel | 10,0 à 12,0 |
| cuivre | 3,5 à 4,5 |
le reste étant du fer ainsi que des impuretés résultant de la production, et contenant supplémentairement un ou plusieurs des éléments suivants, en pourcentagte en masse:
| | |
|---|---|
| manganèse | max. 1,5 |
| silicium | max. 0,4 |
| carbone | max. 0,02 |
| nitrogène | max. 0,02 |
| soufre | max. 0,01 |
| phosphore | max. 0,03 |
| molybdène | max. 1,0 |
| titane | max. 0,03 |
| niobium | max. 0,05 |
| aluminium | max. 0,1 |
| cobalt | max. 0,3 |
| bore | max. 0,003 |
comme matériau pour la production des monnaies et des jetons battus.

2. Utilisation selon revendication 1, caractérisée en ce que l'épaisseur des couches plaquées est 10 à 30% de l'épaisseur totale du matériau composite stratifié.

3. Utilisation selon revendication 1 ou 2, caractérisée en ce que la couche de noyau est composée du matériau X 6 Cr 17.
